# FASCICULE DE BREVET EUROPEEN

(11) **EP 3 990 260 B1**
(45) Date de publication et mention de la délivrance du brevet: **06.09.2023**
(21) Numéro de dépôt: 20734225.4
(22) Date de dépôt: 26.06.2020
(51) Int. Cl.: B29C 64/147, B23P 23/04, B33Y 10/00, B33Y 30/00, G05B 19/4099

(54) **PROCÉDÉ ET MACHINE D'AUTOMATISATION DE FABRICATION D'UN OBJET SELON UN PROCÉDÉ DE FABRICATION ADDITIVE DE TYPE SOLIDE/SOLIDE, COUCHE PAR COUCHE**
VERFAHREN UND MASCHINE ZUR AUTOMATISIERUNG DER HERSTELLUNG EINES GEGENSTANDES NACH EINEM SCHICHT FÜR SCHICHT ADDITIVEN HERSTELLUNGSVERFAHREN VON FESTKÖRPER/FESTKÖRPER-TYP.
METHOD AND MACHINE FOR AUTOMATING THE MANUFACTURE OF AN OBJECT LAYER BY LAYER WITH AN ADDITIVE MANUFACTURING METHOD OF THE TYPE SOLID/SOLID.

(30) Priorité: 27.06.2019 FR 1907059
(43) Date de publication de la demande: 04.05.2022
(73) Titulaire: Cirtes SRC, 88100 Saint-Dié-des-Vosges (FR); Barlier, Claude, 88100 Coinches (FR)
(72) Inventeur: PELAINGRE, Cyril, 88650 MANDRAY (FR); DI GIUSEPPE, David, 54120 BERTRICHAMPS (FR); CUNIN, Denis, 88600 LES POULIERES (FR); RICATTE, Hugo, 88100 TAINTRUX (FR); DELEBECQUE, Benoît, 88100 NAYEMONT LES FOSSES (FR); GUILLAUME, Thomas, 88470 SAINT-MICHEL-SUR-MEURTHE (FR); BARLIER, Claude, 88100 COINCHES (FR)
(74) Mandataire: Rhein, Alain
(86) Numéro de dépôt international: PCT/EP2020/068126
(87) Numéro de publication internationale: WO 2020/260652

(56) Documents cités:
- EP-A1- 0 369 909
- FR-A1- 2 789 188
- GB-A- 2 011 814
- US-A- 5 847 958

## Description

La présente invention a pour objet un procédé et une machine d'automatisation de fabrication d'un objet selon un procédé de fabrication additive de type solide/solide, couche par couche, tel que celui connu sous l'appellation Stratoconception^{®}.

Le procédé de fabrication additive dit de Stratoconception^{®} élaboré par la présente Demanderesse, consiste, dans sa version la plus simple, à numériser l'objet à fabriquer, à le décomposer numériquement en différentes couches élémentaires complémentaires, à mettre en panoplies, puis à reproduire ces différentes couches par des opérations de découpes et/ou d'usinages pour obtenir des strates, enfin à, superposer et/ou juxtaposer, positionner, assembler et solidariser lesdites différentes strates pour reproduire l'objet à fabriquer.

De manière accessoire, selon la complexité de la pièce à fabriquer, il peut être prévu lors de fabrication des strates, d'ajouter à la forme à réaliser, des éléments d'assemblage, tels que des extensions ou pontets, pour permettre l'indexage d'une pièce par rapport à une autre lors de l'assemblage, et destinés à être éliminés ultérieurement. On notera que dans un but également d'indexage, il peut être prévu d'utiliser des inserts, qui servent à la fois de pions de positionnement et de liens entre les strates.

De manière générale, les différentes strates sont de même épaisseur et découpées dans une ou plusieurs plaques d'un matériau, le positionnement et l'orientation des différentes strates sur une plaque est choisi dans un but d'optimisation, et aboutit à l'élaboration d'une panoplie de strates.

On notera une difficulté supplémentaire en ce que les plaques peuvent présenter d'origine des variations d'épaisseur avec pour conséquence le non-respect des dimensions. Il est bien entendu possible d'utiliser des plaques calibrées, ou bien de recalibrer les plaques avant utilisation avec pour conséquence un accroissement des coûts.

D'autre part, il convient également de tenir compte du joint créé entre chaque strate lors de l'opération de collage, dont l'épaisseur, bien que calibrée lors du dépôt, peut aussi influer sur les dimensions finales de l'objet à reproduire.

La complexité de certains objets à fabriquer, et donc des différentes strates, peut conduire à non seulement réaliser une découpe de la plaque, mais également des opérations de fraisage 3D pour créer les parties en dépouille et en contre-dépouille, en association avec le retournement de la panoplie de strates si nécessaire.

Un tel procédé de fabrication ne pose aucun problème de réalisation lorsqu'il est mis en oeuvre de manière artisanale, comme c'est le cas dans le document FR 2 789 188, il n'en est toutefois pas de même lorsqu'il s'agit de l'industrialiser et de l'automatiser. Ce document présente le procédé de fabrication additive de type solide/solide, couche par couche, tel que celui connu sous l'appellation Stratoconception^{®}, sans aborder l'automatisation de fabrication, mais dans une version artisanale, voire manuelle.

On sait parfaitement que le passage d'une fabrication artisanale à une automatisation, ne consiste pas en une simple transposition des actions manuelles.

La présente invention a donc pour but de proposer un procédé permettant cette automatisation de fabrication d'un objet selon un procédé de fabrication additive de type solide/solide, couche par couche, et dans le but de supprimer toute intervention manuelle.

Le procédé d'automatisation de la fabrication d'un objet selon un procédé de fabrication additive de type solide/solide, couche par couche, se caractérise en ce qu'il comprend les étapes suivantes:
- décomposition numérique dudit objet selon un ou plusieurs axes, et une épaisseur, en différentes strates, par tranchage numérique,
- répartition optimisée en une panoplie desdites strates sur une plaque de matière brute,
- calcul des trajectoires du ou des outils de découpe et/ou d'usinage,
- tranchage numérique des strates, puis micro-fraisage du recto des strates de la panoplie en finition,
- retournement de la panoplie,
- calage, repérage et positionnement de la panoplie,
- micro-fraisage en panoplie du verso des strates en ébauche,
- extraction d'une première strate de la panoplie, puis déplacement dans un plan dit horizontal XY, et positionnement angulaire de ladite strate sur une zone de montage et de finition,
- dépose de colle sur ladite première strate,
- extraction d'une deuxième strate de la panoplie, puis déplacement selon ledit plan XY, et positionnement angulaire de ladite strate, et dépose et maintien sur ladite première strate, puis reproduction des étapes de collage et d'extraction pour chacune des strates restant à assembler.
- micro-fraisage en verso après chacune des opérations de dépose d'une strate sur une autre après collage,
- puis reproduction des étapes de collage et d'extraction pour chacune des strates restant à assembler.

Selon une caractéristique additionnelle du procédé selon l'invention, une étape de détermination de la nature, de la forme et du positionnement d'éléments d'assemblage internes ou externes à l'objet est intercalée entre l'étape décomposition numérique de l'objet et celle de répartition optimisée en une panoplie.

L'opération de micro-fraisage a pour but, outre la finition, de supprimer les surplus de joint issus du collage, et surtout de rectifier les défauts liés notamment à l'empilement. Cette opération est faite après empilement de chaque strate, en sorte de réajuster les paramètres dimensionnels à chaque niveau, sachant par exemple qu'un seul usinage 3D de l'objet en fin d'opération d'empilement serait probablement inopérant voire impossible à mettre oeuvre.

EP 0 369 909 A1 divulgue une machine selon le préambule de la revendication 3.

Il existe déjà des automates permettant de réaliser certaines opérations de mise en oeuvre d'un procédé de fabrication additive de type solide/solide, couche par couche.

Une telle machine comprend une table, de préférence de type à dépression, et des outils d'usinage montés mobiles en déplacement au-dessus de ladite table, au travers par exemple d'une traverse mobile longitudinalement au-dessus de ladite table et équipée d'outils d'usinage mobiles le long de ladite traverse, les déplacements étant gérés par une unité centrale informatique.

Une telle machine est toutefois limitée dans son utilisation, elle ne permet pas de mettre en oeuvre l'ensemble du procédé selon l'invention.

La présente demande a donc également pour objet une machine permettant de pallier cette carence, et de mettre en oeuvre le procédé selon l'invention.

La machine permettant l'automatisation de fabrication d'un objet selon un procédé de fabrication additive de type solide/solide, couche par couche, selon l'invention, comprend une table d'usinage à maintien par dépression et au moins un outil d'usinage monté mobile en déplacement au-dessus de ladite table, et elle se caractérise en ce qu'elle comporte en outre, un poste de retournement comprenant d'une part une traverse, mobile longitudinalement au-dessus de ladite table et mobile verticalement, portant un moyen préhenseur d'une plaque monté mobile en rotation selon un axe parallèle à ladite traverse, et d'autre part un moyen support d'une plaque, conçu apte à autoriser la préhension de celle-ci par l'une ou l'autre de ses deux faces, au travers dudit moyen préhenseur, et d'autre part encore des moyens de calage en X et Y aptes à permettre le repérage et le positionnement d'une plaque, d'une panoplie ou d'une strate.

Il est à noter que si le poste de retournement est avant tout adapté à retourner une panoplie il est parfaitement possible de le configurer pour le retournement d'une strate, selon les besoins, tout comme il permet également le retournement d'une simple plaque.

Selon une caractéristique additionnelle de la machine selon l'invention, la traverse qui porte le moyen préhenseur du poste de retournement est montée mobile sur deux bancs, tandis qu'un porte-outil est monté mobile le long d'une traverse mobile sur les mêmes deux bancs.

Selon une autre caractéristique additionnelle de la machine selon l'invention, sur le porte-outil sont adaptables des moyens de préhension d'une pièce découpée, ainsi que des moyens d'encollage ou analogue.

Selon l'invention une variante de la machine selon l'invention, les moyens d'usinage sont également adaptables au porte-outil.

En effet, les machines existantes comportent chacune, comme cela a été évoqué, une table et des outils d'usinage montés mobiles en déplacement au-dessus de ladite table. Il est possible d'adapter ces tables existantes, pour les rendre conformes à la présente invention. Ainsi, il est ajouté à ces tables existantes qui sont aptes à réaliser la découpe et l'usinage d'une plaque pour obtenir une panoplie, d'une part les moyens de retournement ainsi que le porte-outil et les outils pour la préhension et l'encollage des pièces issues de la panoplie.

Sur une machine qui ne constitue pas une adaptation à une machine existante, le porte-outil est conformé pour porter également les outils de coupe et d'usinage.

Selon une autre caractéristique additionnelle de la machine selon l'invention, elle comporte de plus des moyens de nettoyage de la table, associés au porte-outil.

Selon une autre caractéristique additionnelle de la machine selon l'invention, elle comporte une zone d'assemblage comprenant une table de montage associée à un ascenseur apte à maintenir l'objet à fabriquer à une hauteur fonction de la hauteur de la table d'usinage.

Selon une autre caractéristique additionnelle de la machine selon l'invention, la zone d'assemblage comporte des moyens de bridage, contre la table de montage, de l'objet en cours d'assemblage et après collage, et qui coopèrent avec l'ascenseur de de ladite table pour réaliser le pressage dudit objet.

Selon une autre caractéristique additionnelle de la machine selon l'invention, le moyen support d'une plaque est monté escamotable dans la table d'usinage.

Les avantages et les caractéristiques du procédé et de la machine selon l'invention, ressortiront plus clairement de la description qui suit et qui se rapporte au dessin annexé, lequel en représente plusieurs modes de réalisation non limitatifs.

Dans le dessin annexé:
- les figures 1, 2, 3, 4, 5 et 6, représentent des vues schématiques en perspective de différentes étapes de construction d'un objet, en utilisant le procédé selon l'invention.
- la figure 7 représente une vue schématique en perspective d'une machine selon l'invention.
- les figures 8, 9, 10, 11, 12, 13, 14, 15, 16, 17, 18, 19 et 20 représentent des vues schématiques en perspective de la même machine, lors de différentes étapes successives de mise en oeuvre du procédé selon l'invention,
- la figure 21 représente une vue schématique en perspective d'une variante de la machine selon l'invention.
- la figure 22 représente une vue schématique en perspective d'une autre variante de la machine selon l'invention.
- la figure 23 représente une vue schématique en perspective d'une autre variante de la même machine selon l'invention.
- les figures 24, 25, 26, 27 28 et 29, représentent chacune une vue schématique et en perspective d'une partie de cette même variante de machine, dans une configuration particulière d'utilisation.

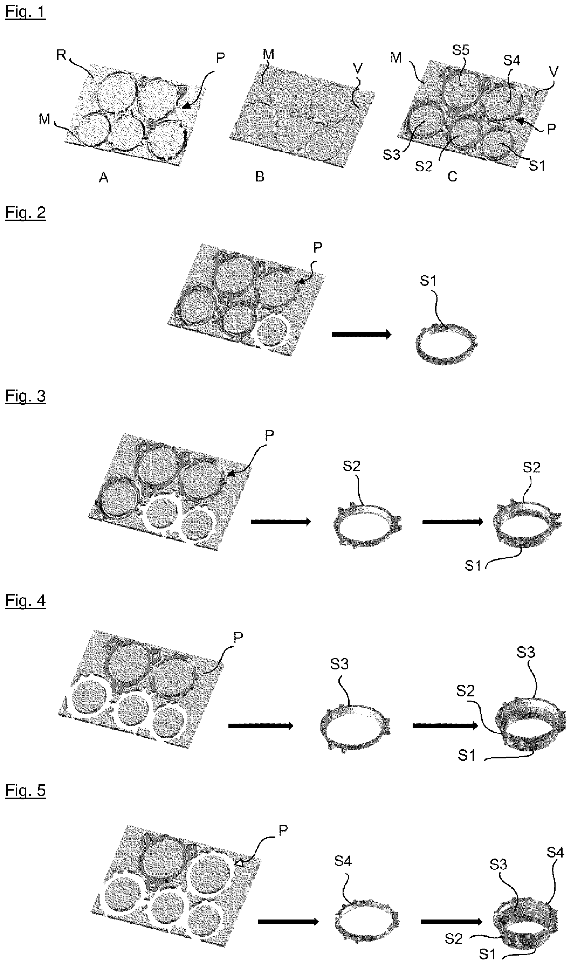

En référence à la figure 1, on peut voir trois étapes de préparation d'une plaque de matériau M pour la fabrication d'un objet selon un procédé de fabrication additive de type solide/solide, couche par couche, tel que celui connu sous l'appellation Stratoconception^{®}.

Préalablement, selon l'invention le procédé, l'objet à reproduire aura été décomposé numériquement selon un ou plusieurs axes, en l'occurrence un seul, et une épaisseur, en différentes strates, lesquelles sont agencées en une panoplie P sur la plaque M, tandis que les trajectoires du ou des outils de découpe et d'usinage ont été définies.

Sur la figure 1 l'étape A correspond au tranchage et au micro-fraisage du recto R de la plaque M en finition 3D, l'étape B correspond au retournement de la plaque M en sorte d'en exposer le verso V aux outils, et l'étape C correspond au micro-fraisage en panoplie du verso des strates en ébauche 2D, en l'occurrence cinq strates S1, S2, S3, S4 et S5.

Sur la figure 2, la strate S1 est extraite de la panoplie P, pour être positionnée, et subir d'une part un micro-fraisage de finition 3D, et un encollage de son bord supérieur.

Sur la figure 3, la strate S2 est extraite de la panoplie P, pour être déposée, positionnée et assemblée à la strate S1, l'ensemble étant ensuite exposé à un micro-fraisage de finition 3D, et à un encollage du bord supérieur de la strate S2.

Sur la figure 4, la strate S3 est extraite de la panoplie P, pour être déposée, positionnée et assemblée à la strate S2, l'ensemble étant ensuite exposé à un micro-fraisage de finition 3D, d'enlèvement des excès de joint, et à un encollage du bord supérieur de la strate S3.

Sur la figure 5, la strate S4 est extraite de la panoplie P, pour être déposée, positionnée et assemblée à la strate S3, l'ensemble étant ensuite exposé à un micro-fraisage de finition 3D, d'enlèvement des excès de joint, et à un encollage du bord supérieur de la strate S4.

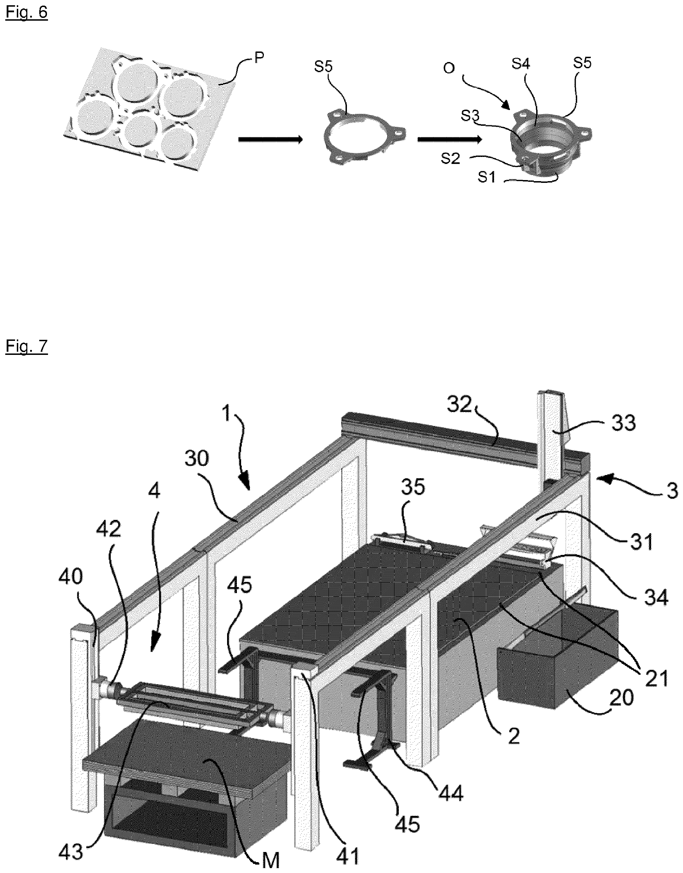

Enfin, sur la figure 6, la strate S5 est extraite de la panoplie P, pour être déposée et assemblée à la strate S4, l'ensemble étant ensuite exposé à un micro-fraisage de finition 3D, afin d'obtenir l'objet 0.

On notera qu'à chaque étape, le micro-fraisage permet également de corriger les défauts selon l'axe dit vertical Z orthogonal au plan XY, liés aux potentielles variations d'épaisseurs des plaques et du joint.

En référence maintenant à la figure 7, on peut voir une machine 1 selon l'invention permettant de mettre en oeuvre de manière automatique le procédé décrit ci-dessus.

Cette machine 1 comprend une table 2, de préférence à dépression, ainsi qu'un portique cartésien 3 comprenant deux bancs 30 et 31 bordant latéralement et longitudinalement la table 2, sur laquelle peut se déplacer, dans le sens longitudinal, une traverse mobile sur laquelle est monté mobile le long de celle-ci un porte outil 33, tandis qu'à une extrémité de la table 2 sont entreposés des outils 34 destinés à être adaptés au porte-outil 33.

On notera que la représentation de la machine n'est pas limitative, elle peut par exemple être conçue pour que les déplacements longitudinaux soient réalisés au niveau de la base.

La machine 1 comporte également un poste de chargement/retournement 4 coopérant avec les deux bancs 30 et 31, et qui comprend deux chariots 40 et 41, mobiles en déplacement sur les bancs, respectivement 30 et 31, une traverse 42, mobile verticalement sur les chariots 40 et 41, ainsi qu'en rotation axiale, et portant des moyens préhenseurs 43. Le poste de retournement 4 comprend également une console 44, disposée à l'extrémité de la table 2 opposée à celle où sont entreposés des outils 34, et qui comprend essentiellement deux équerres 45 écartées l'une de l'autre pour libérer un espace central, permettant le passage des moyens préhenseurs 43.

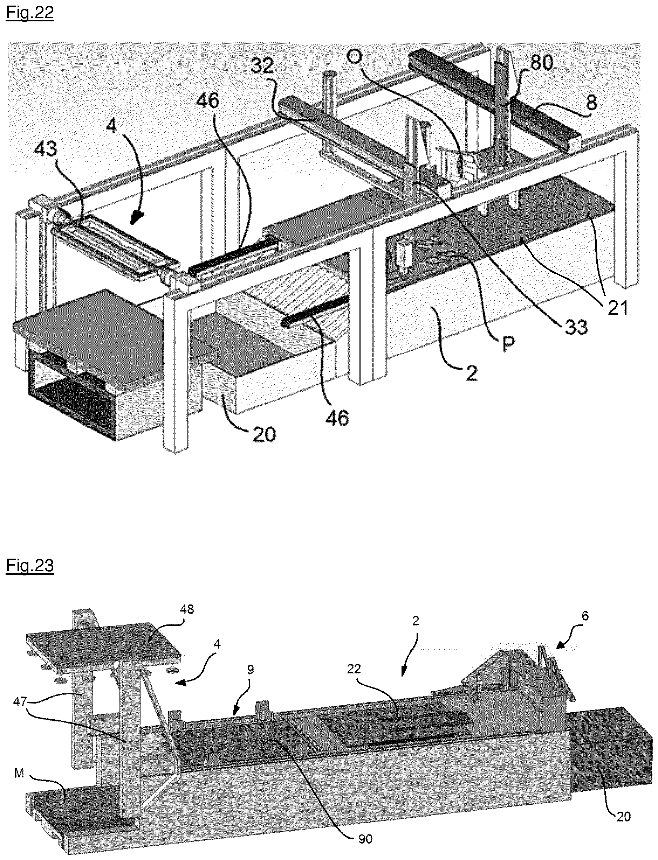

Dans une variante de construction, les deux équerres 45 peuvent être remplacées par les dents 46 d'une fourche rétractable dans la table 2, telle que cela est représenté sur la figure 22.

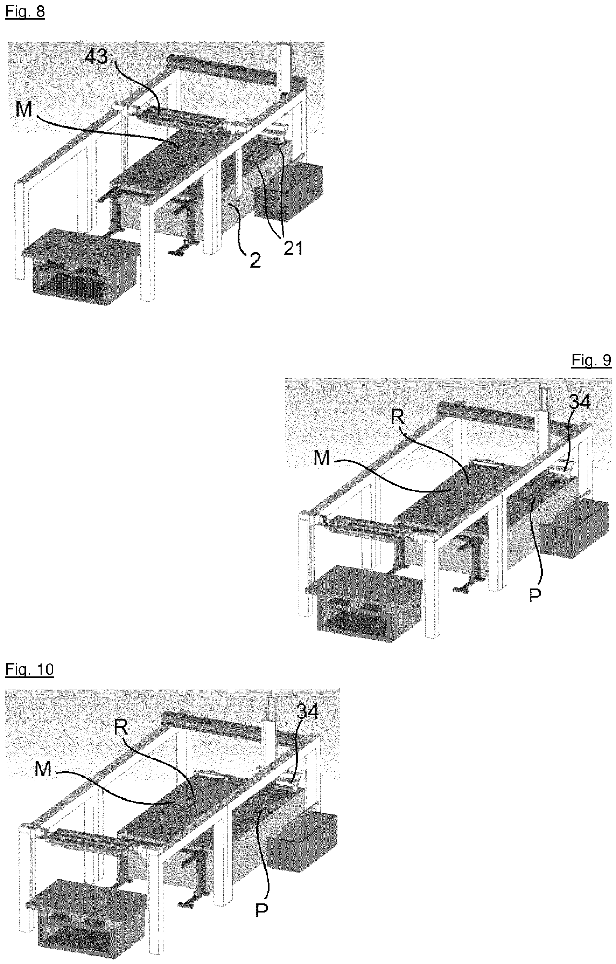

En référence maintenant aux figures 8 à 19 on va décrire des étapes du procédé de fabrication, mis en oeuvre avec la machine 1.

Sur la figure 8, les moyens préhenseurs 43 ont prélevé une plaque de matériau M sur un emplacement stockage pour la déposer sur la table 2, le positionnement dans un plan dit horizontal XY étant réalisé par calage en butée en l'occurrence contre des plots 21.

Sur la figure 9, le recto R de la plaque M est tranché et usiné en finition 3D au moyen des outils 34, pour créer la panoplie P.

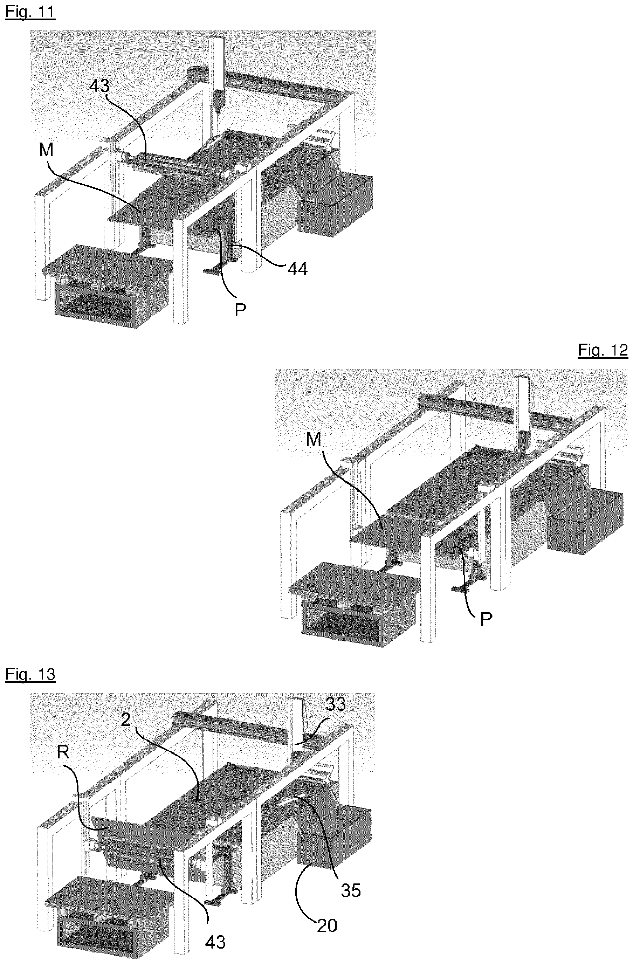

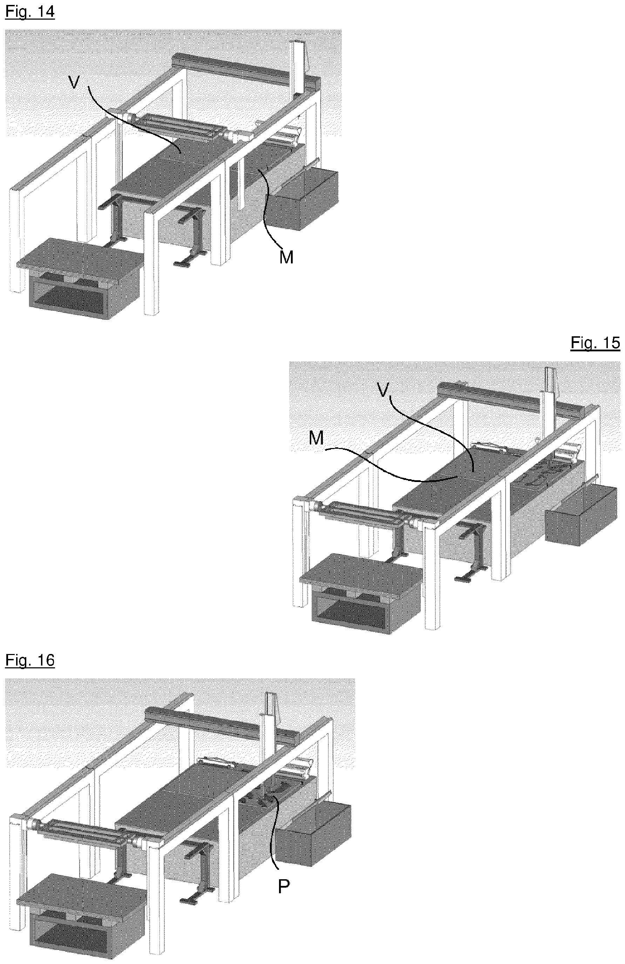

Les figures 10 à 14 concernent le retournement de la panoplie P. Sur la figure 10, la plaque M est saisie par les moyens préhenseurs 43 puis, figure 11, déposée sur la console 44 en appui par son verso V puis, figure 12, les moyens préhenseurs 43 sont positionnés sous la plaque M, entre les équerres 45, pour la saisir par son verso V, enfin figure 13, la plaque M est retournée pour aller être déposée sur la table 2 sur son recto R, figure 14.

Il est à noter que sur la figure 13 on peut voir que pendant la phase de retournement de la plaque M, un nettoyage de la table 2 est réalisé en temps masqué, le porte-outil 33 ayant saisi un moyen de nettoyage 35 de type racloir et aspirateur, qui est déplacé en surface, pour repousser et aspirer les résidus d'usinage hors de la table 2, en l'occurrence pour les faire tomber dans un réceptacle 20.

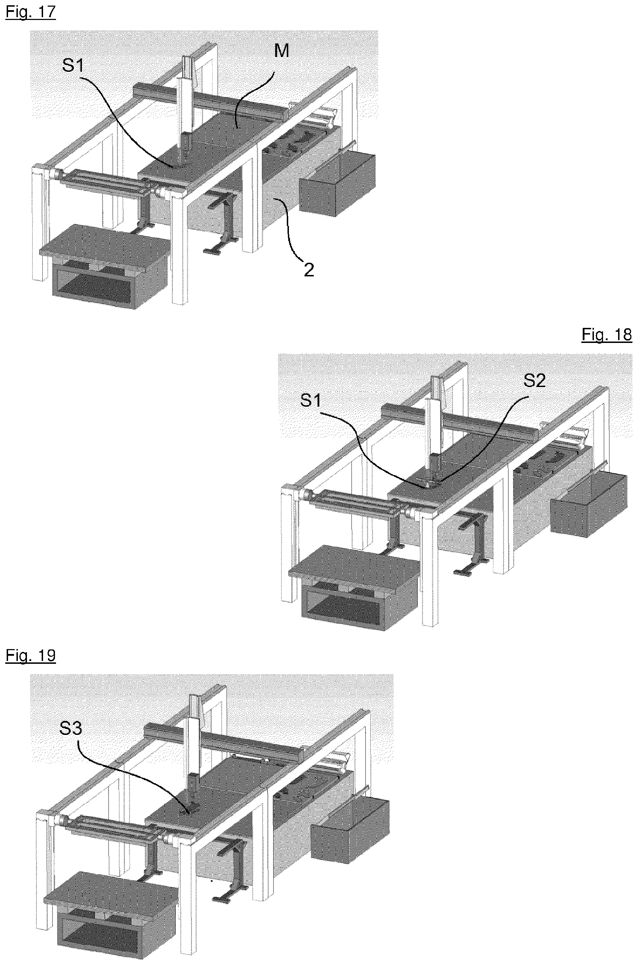

Sur la figure 15, le verso V de plaque M est usiné en ébauche 2D, tandis que sur la figure 16 une strate S1 est prélevée dans la panoplie P et, figure 17, est déposée sur la table 2 à côté de la plaque M dans une zone de montage/empilement.

On notera que la zone de montage/empilement et celle d'usinage représentées sur les figures peuvent être interchangeables, comme cela est par exemple représenté sur la figure 22. Sur la figure 18 une strate S2 est prélevée dans la panoplie et déposée à côté de la strate S1, tandis que sur la figure 19, une strate S3 est prélevée dans la panoplie et déposée sur les strates S1 et S2 après usinage puis encollage de celles-ci.

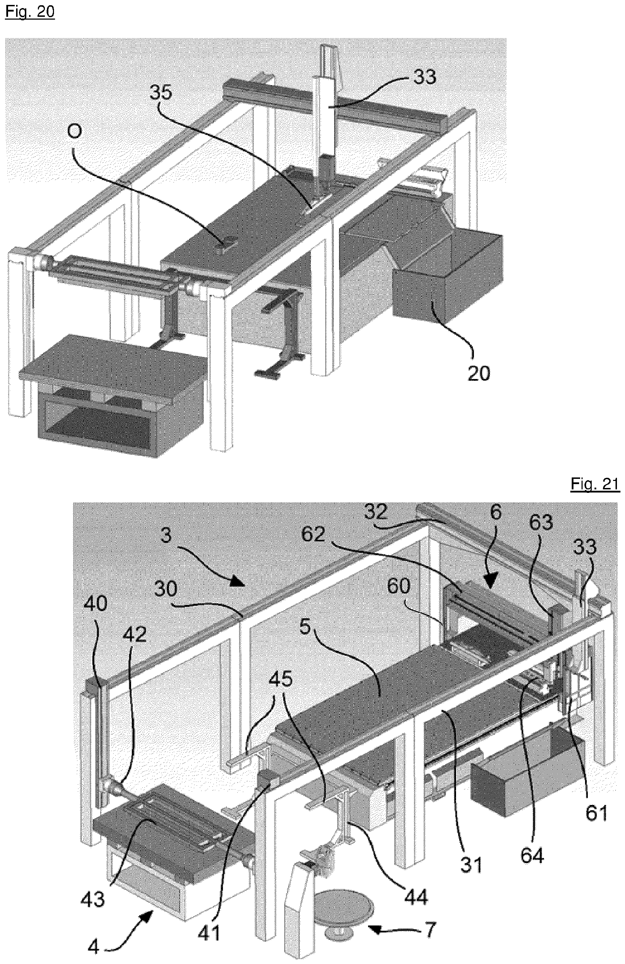

Sur la figure 20, on peut voir l'objet O terminé tandis que le porte-outil 33 et le moyen de nettoyage 35 évacuent les résidus.

En référence maintenant à la figure 21, on peut voir une variante de la machine selon l'invention, et plus particulièrement une adaptation à une machine existante.

Cette machine existante comporte une table 5 à laquelle est associé un portique mobile 6, comprenant deux montants latéraux 60 et 61, mobile le long de la table 5, et une traverse 62 qui les relie, qui est donc mobile au-dessus de la table 5 et le long de laquelle peut se déplacer un porte-outil 63 apte à saisir des outils 64 d'usinage stockés en extrémité de la table 5.

Selon l'invention, la table 5 existante est complétée, pour lui permettre de reproduire le procédé selon l'invention, par l'adjonction d'une part d'un portique 3 comprenant deux bancs 30 et 31 une traverse mobile 32, pour déplacer un porte-outil 33, qui est toutefois réservé aux opérations de préhension, d'encollage et de pressage des strates, ainsi qu'au nettoyage de la table 5; et d'autre part d'un poste de retournement 4 comprenant deux chariots 40 et 41, une traverse 42, des moyens préhenseurs 43, et une console 44.

Dans le mode de réalisation représenté, la machine est associée extérieurement à un poste d'usinage 7 permettant de réaliser les finitions, et notamment, mais non exclusivement, l'enlèvement des extensions ou pontets qui ont servi à l'indexage.

Il est à noter que le poste 7 peut être avantageusement remplacé par l'association d'un outil d'usinage au porte-outil 33 par l'intermédiaire d'un porte-outil à deux axes de rotation, ou bien d'une tête birotative, pour un usinage sur cinq axes. Cette configuration permet notamment d'intégrer toutes les fonctions dans une même machine.

En référence maintenant à la figure 22, on peut voir selon une autre variante, notamment de la machine représentée sur la figure 7.

Sur cette machine est ajoutée une traverse mobile supplémentaire 8, à laquelle est associée un porte-outil 80 dédié à l'encollage et à la manipulation des strates en vue d'assemblage, en sorte de pouvoir dissocier les fonctions usinage/nettoyage et encollage/empilement. Cette dissociation autorise un traitement en temps masqué plus efficient.

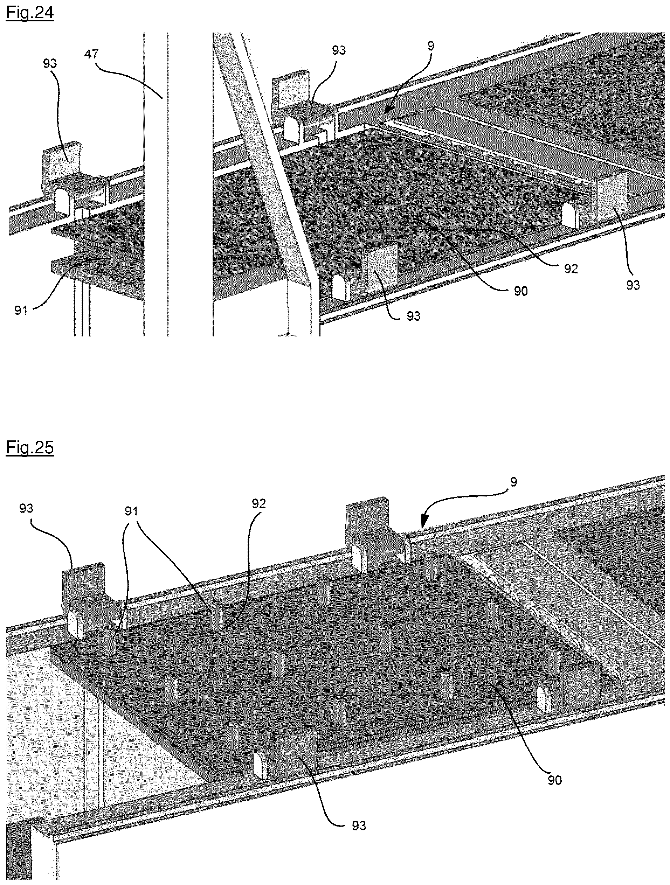

En référence maintenant à la figure 23, ainsi qu'aux figures 24, 25, 26, 27 28 et 29, on peut voir une variante de la machine permettant de mettre en oeuvre de manière automatique le procédé selon l'invention, dans laquelle les différents postes dédiés à une ou plusieurs opérations sont de conception différente de celle décrite précédemment.

Ainsi, sur la figure 23 qui représente la machine dans son ensemble, on peut voir qu'elle comprend une table 2, un portique mobile 6 équipé d'un porte-outil 63, un poste de chargement/retournement 4 de plaques M, constitué d'un portique mobile comprenant deux colonnes mobiles 47 entre lesquelles peut évoluer un plateau préhenseur 48, et enfin une zone d'assemblage 9 dédiée au montage de l'objet à réaliser.

Comme on peut le voir plus en détail sur les figures 24 et 25, la zone de d'assemblage 9 comporte une table de montage 90, qui est associée à un ascenseur en sorte que l'objet en cours de montage puisse descendre au fur et à mesure, afin que la dernière strate assemblée puisse toujours être au même niveau que la table d'usinage 2.

De plus, la table de montage 90 coopère avec de plots de soulèvement 91, qui peuvent la traverser par des trous 92, pour permettre l'extraction de l'objet après assemblage.

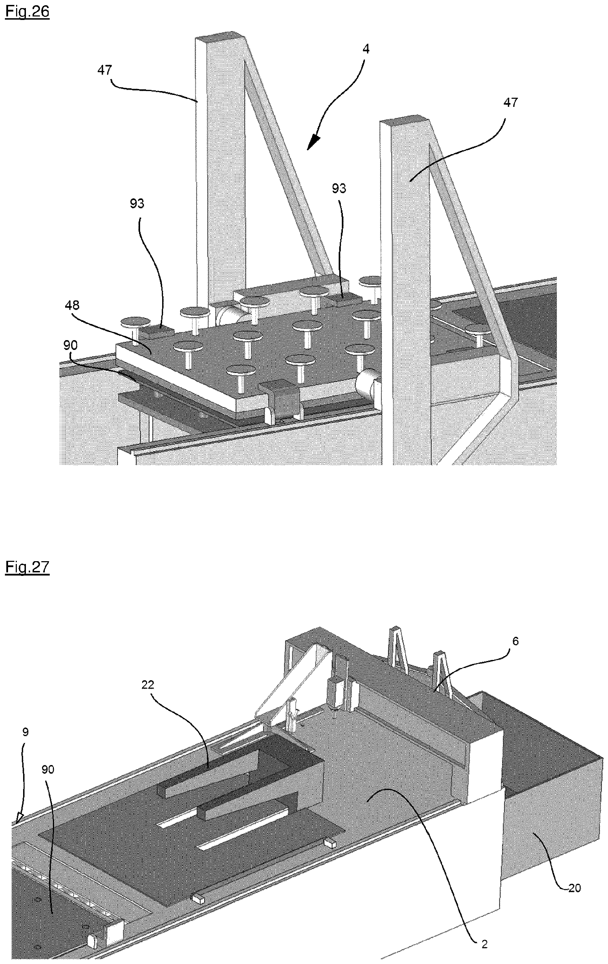

En référence maintenant à la figure 26, on peut voir que la table de montage 90 associée à son ascenseur ainsi qu'au plateau préhenseur 48 du poste de chargement/retournement 4, peut faciliter les opérations de pressage après collage.

Ainsi le plateau préhenseur 48 est retourné sur l'empilement, non représenté, de strates fraichement collées, posé sur la table d'assemblage 90, tandis que d'une part des brides 93, que comporte la zone de montage, en périphérie de la table de montage 90, viennent clamper le plateau préhenseur 48, et d'autre part la table de montage 90 associée à son ascenseur presse l'empilement du bas vers le haut.

Avantageusement, l'effort de pressage est encaissé par les brides 93, et non par le portique du poste de chargement/retournement 4.

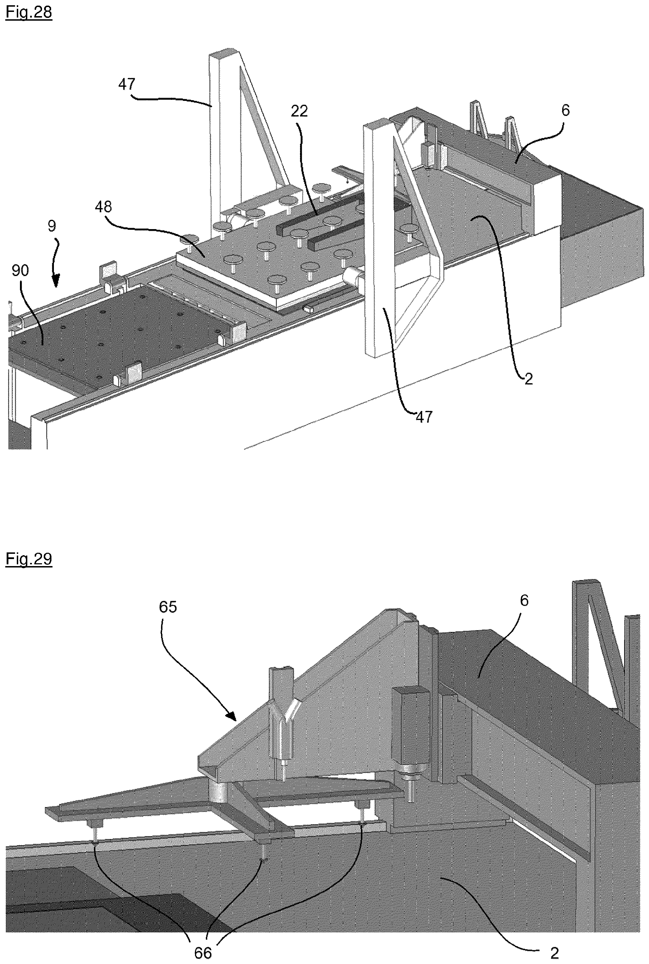

En référence maintenant aux figures 27 et 28, on peut voir que la table 2 incorpore une fourche 22, apte à s'en extraire pour soulever la plaque M, non représentée, après son usinage en recto, pour permettre au plateau préhenseur 48 de passer en dessous pour la saisir par son verso non usiné ce qui facilite sa préhension, en vue du retournement.

En référence à la figure 29, on peut voir que le portique 6 est équipé d'un préhenseur 65, muni de trois points 66 de préhension, permettant de saisir les strates de manière très stable.

La machine représentée sur ces figures permet de mettre en oeuvre le procédé selon l'invention de la même manière qu'avec les machines précédemment décrites, tout en étant est de conception plus compacte et rigide.

## Revendications

1. Procédé d'automatisation de la fabrication d'un objet selon un procédé de fabrication additive de type solide/solide, couche par couche, **caractérisé en ce qu'**il comprend les étapes suivantes :
- décomposition numérique dudit objet selon un ou plusieurs axes, et une épaisseur, en différentes strates (S, S1, S2, S3, S4, S5), par tranchage numérique,
- répartition optimisée en une panoplie (P) desdites strates (S, S1, S2, S3, S4, S5), sur une plaque de matière brute (M),
- calcul des trajectoires du ou des outils de découpe et/ou d'usinage,
- tranchage numérique des strates (S, S1, S2, S3, S4, S5), puis micro-fraisage du recto des strates (S, S1, S2, S3, S4, S5), de la panoplie (P) en finition,
- retournement de la panoplie (P),
- calage, repérage et positionnement de la panoplie,
- micro-fraisage en panoplie du verso des strates (S, S1, S2, S3, S4, S5), en ébauche,
- extraction d'une première strate (S1) de la panoplie (P), puis déplacement dans un plan dit horizontal XY et positionnement angulaire de ladite strate (S1), sur une zone de montage et de finition,
- dépose de colle sur ladite première strate (S1),
- extraction d'une deuxième strate (S2) de la panoplie (P), puis déplacement selon ledit plan XY, et positionnement angulaire de ladite strate (S2), et dépose et maintien sur ladite première strate (S1),
- micro-fraisage en verso, après chacune des opérations de dépose d'une strate (S, S1, S2, S3, S4, S5) sur une autre après collage, dans un but de finition, de suppression des excès du joint issus du collage, et de rectification des défauts liés à l'empilement, en sorte de réajuster les paramètres dimensionnels à chaque niveau, et de corriger des défauts selon l'axe dit vertical Z orthogonal au plan XY liés aux potentielles variations d'épaisseurs des plaques et dudit joint,
- reproduction des étapes de collage et d'extraction pour chacune des strates restant à assembler.

2. Procédé selon la revendication 1, **caractérisé en ce qu'**une étape de détermination de la nature, de la forme et du positionnement d'éléments d'assemblage internes ou externes à l'objet est intercalée entre l'étape décomposition numérique de l'objet et celle de répartition optimisée en une panoplie.

3. Machine permettant l'automatisation de fabrication d'un objet selon un procédé de fabrication additive de type solide/solide, couche par couche, comprenant une table d'usinage (2 ; 5) à maintien par dépression et au moins un outil d'usinage monté mobile en déplacement au-dessus de ladite table, **caractérisée en ce qu'**elle comporte en outre, un poste de retournement (4) comprenant d'une part une traverse (42), mobile longitudinalement au-dessus de ladite table (2 ; 5) et mobile verticalement, portant un moyen (43 ; 48) préhenseur d'une plaque (M) monté mobile en rotation selon un axe parallèle à ladite traverse (42), et d'autre part un moyen (45 ; 46 ; 22) support d'une plaque, (M) conçu apte à autoriser la préhension de celle-ci par l'une ou l'autre de ses deux faces (R, V), au travers dudit moyen préhenseur (43), et d'autre part encore des moyens (21) de calage en X et Y aptes à permettre le repérage et le positionnement d'une plaque (M), d'une panoplie (P) ou d'une strate (S).

4. Machine selon la revendication 3, **caractérisée en ce que** la traverse (42) qui porte le moyen préhenseur (43) du poste de retournement (4) est montée mobile sur deux bancs (30, 31), tandis qu'un porte-outil (33 ; 80) est monté mobile le long d'une traverse mobile (32 ; 8) sur les mêmes deux bancs.

5. Machine selon la revendication 3, **caractérisée en ce que** le, moyen préhenseur (48) d'une plaque (M) est porté par deux colonnes mobiles (47).

6. Machine selon la revendication 4 ou la revendication 5, **caractérisée en ce que** sur le porte-outil (3 ; 80) sont adaptables des moyens de préhension d'une pièce découpée, ainsi que des moyens d'encollage ou analogue.

7. Machine selon l'une quelconque des revendications 4, 5 ou 6, **caractérisée en ce que** les moyens d'usinage (34) sont également adaptables au porte outil (33).

8. Machine selon l'une quelconque des revendications 4, 5, 6 ou 7 **caractérisée en ce qu'**elle comporte de plus des moyens (35) de nettoyage de la table, (2 ; 5) adaptable au porte-outil (33).

9. Machine selon l'une quelconque des revendications 4, 5, 6, 7 ou, 8 **caractérisée en ce qu'**elle comporte une zone d'assemblage (9), comprenant une table de montage (90) associée à un ascenseur apte à maintenir l'objet (O) à fabriquer à une hauteur fonction de la hauteur de la table d'usinage (2).

10. Machine selon la revendication 9, **caractérisée en ce que** la zone d'assemblage comporte des moyens (93) de bridage contre la table de montage (90), de l'objet (O) en cours d'assemblage et après collage, et qui coopèrent avec l'ascenseur de ladite table (90) pour réaliser le pressage dudit objet (O).

11. Machine selon l'une quelconque des revendications 9 à 10, **caractérisée en ce que** le moyen (45 ; 46) support d'une plaque (P) est monté escamotable dans la table d'usinage (2).

## Patentansprüche

1. Verfahren zum Automatisieren der Fertigung eines Objekts nach einem Verfahren der additiven Fertigung einer Art Feststoff/Feststoff, Lage für Lage, **dadurch gekennzeichnet, dass** es die folgenden Schritte umfasst:
- digitales Zerlegen des Objekts entlang einer oder mehrerer Achsen und einer Dicke, in unterschiedliche Schichten (S, S1, S2, S3, S4, S5), durch digitales Zerteilen,
- optimiertes Aufteilen in eine Reihe (P) der Schichten (S, S1, S2, S3, S4, S5), auf einer Platte aus Ausgangsmaterial (M),
- Berechnen von Bahnen des oder der Schneid- und/oder Bearbeitungswerkzeuge,
- digitales Zerteilen der Schichten (S, S1, S2, S3, S4, S5), dann Mikrofräsen der Vorderseite der Schichten (S, S1, S2, S3, S4, S5) der Reihe (P) bei einer Fertigstellung,
- Wenden der Reihe (P),
- Verkeilen, Markieren und Positionieren der Reihe,
- Mikrofräsen in der Reihe der Rückseite der Schichten (S, S1, S2, S3, S4, S5), bei einem Schruppen,
- Extrahieren einer ersten Schicht (S1) der Reihe (P); dann Verschieben in einer horizontal genannten Ebene XY und Winkelpositionieren der Schicht (S1), in einer Montage- und Fertigstellungszone,
- Abscheiden von Klebstoff auf die erste Schicht (S1),
- Extrahieren einer zweiten Schicht (S2) der Reihe (P); dann Verschieben entlang der Ebene XY und Winkelpositionieren der Schicht (S2), und Abscheiden und Halten auf der ersten Schicht (S1),
- Mikrofräsen auf der Rückseite, nach jedem der Abläufe des Abscheidens einer Schicht (S, S1, S2, S3, S4, S5) auf eine andere nach einem Kleben, zu einem Zweck der Fertigstellung, zum Entfernen von Überschuss der Fuge, die bei dem Kleben entstanden ist, und zum Berichtigen von Mängeln in Verbindung mit dem Stapeln, um die Abmessungsparameter auf jeder Höhe nachzurichten, und zum Korrigieren von Mängeln entlang der vertikal genannten Achse Z orthogonal zu der Ebene XY, in Verbindung mit möglichen Dickenvariationen der Platten und der Fuge,
- Reproduzieren der Schritte des Klebens und des Extrahierens für jede der Schichten, deren Zusammenfügen verbleibt.

2. Verfahren nach Anspruch 1, **dadurch gekennzeichnet, dass** ein Schritt einer Bestimmung der Natur, der Form und der Positionierung von inneren oder äußeren Zusammenfügungselementen an dem Objekt zwischen dem Schritt des digitalen Zerlegens des Objekts und dem des optimierten Aufteilens in eine Reihe eingeschoben ist.

3. Maschine, die die Automatisierung der Fertigung eines Objekts nach dem Verfahren der additiven Fertigung der Art Feststoff/Feststoff, Lage für Lage, ermöglicht, umfassend einen Bearbeitungstisch (2; 5) zum Halten durch Unterdruck und mindestens ein Bearbeitungswerkzeug, das verschiebbar über dem Tisch montiert ist, **dadurch gekennzeichnet, dass** sie ferner eine Wendestation (4) aufweist, umfassend einerseits eine Querstrebe (42), die über dem Tisch (2; 5) in Längsrichtung bewegbar und vertikal bewegbar ist, die ein Mittel (43; 48) zum Ergreifen einer Platte (M) trägt, das drehbar entlang einer Achse parallel zu der Querstrebe (42) montiert ist, und andererseits ein Mittel (45; 46; 22) zum Stützen einer Platte, (M), das geeignet ausgelegt ist, um das Ergreifen davon durch die eine oder die andere ihrer zwei Seiten (R, V) mittels des Greifmittels (43) zuzulassen, und noch andererseits Mittel (21) zum Verkeilen in X und Y, die geeignet sind, um das Markieren und das Positionieren einer Platte (M), einer Reihe (P) oder einer Schicht (S) zu ermöglichen.

4. Maschine nach Anspruch 3, **dadurch gekennzeichnet, dass** die Querstrebe (42), die das Griffmittel (43) der Wendestation (4) trägt, auf zwei Werkbänken (30, 31) bewegbar montiert ist, wohingegen ein Werkzeugträger (33; 80) längs einer bewegbaren Querstrebe (32; 8) auf denselben zwei Werkbänken bewegbar montiert ist.

5. Maschine nach Anspruch 3, **dadurch gekennzeichnet, dass** das Griffmittel (48) einer Platte (M) durch zwei bewegbare Ständer (47) getragen wird.

6. Maschine nach Anspruch 4 oder 5, **dadurch gekennzeichnet, dass** auf dem Werkzeugträger (3; 80) Griffmittel eines abgeschnittenen Stücks sowie Mittel zum Verleimen oder dergleichen anpassbar sind.

7. Maschine nach einem der Ansprüche 4, 5 oder 6,
**dadurch gekennzeichnet, dass** die Mittel zum Bearbeiten (34) auch an den Werkzeugträger (33) anpassbar sind.

8. Maschine nach einem der Ansprüche 4, 5, 6 oder 7,
**dadurch gekennzeichnet, dass** sie zusätzlich die Mittel (35) zum Reinigen des Tisches (2; 5), aufweist, die an den Werkzeugträger (33) anpassbar sind.

9. Maschine nach einem der Ansprüche 4, 5, 6, 7 oder 8,
**dadurch gekennzeichnet, dass** sie eine Zusammenfügungszone (9) aufweist, umfassend einen Montagetisch (90), der einem Lift zugeordnet ist, der geeignet ist, um das Objekt (O) zum Fertigen auf einer Funktionshöhe der Höhe des Bearbeitungstisches (2) zu halten.

10. Maschine nach Anspruch 9, **dadurch gekennzeichnet, dass** die Zusammenfügungszone Mittel (93) zum Spannen gegen den Montagetisch (90) des Objekts (O) im Laufe des Zusammenfügens und nach dem Kleben aufweist, und die mit dem Lift des Tisches (90) zum Ausführen des Verpressens des Objekts (O) zusammenwirken.

11. Maschine nach einem der Ansprüche 9 bis 10,
**dadurch gekennzeichnet, dass** das Mittel (45; 46) zum Stützen einer Platte (P) in den Bearbeitungstisch (2) einziehbar montiert ist.

## Claims

1. A method for automating the layer-by-layer manufacturing of an object using a solid/solid additive manufacturing method, **characterized in that** it comprises the following steps:
- digital decomposition of said object along one or more axes, and a thickness, into different strata (S, S1, S2, S3, S4, S5), by means of digital slicing,
- optimized distribution into a set (P) of said strata (S, S1, S2, S3, S4, S5), on a plate of raw material (M),
- calculating the trajectories of the cutting and/or machining tool(s),
- digital slicing of the strata (S, S1, S2, S3, S4, S5), then micro-milling of the front face of the strata (S, S1, S2, S3, S4, S5) of the set (P) in finishing,
- turning over the set (P),
- wedging, marking and positioning the set,
- micro-milling, in the set, of the back face of the strata (S, S1, S2, S3, S4, S5), in rough machining,
- extracting a first stratum (S1) of the set (P), then moving in a so-called horizontal XY plane and angularly positioning said stratum (S1), on a mounting and finishing zone,
- depositing glue on said first stratum (S1),
- extracting a second stratum (S2) of the set (P), then moving along said XY plane, and angularly positioning said stratum (S2), and depositing and holding on said first stratum (S1),
- micro-milling on the reverse side, after each of the operations of depositing a stratum (S, S1, S2, S3, S4, S5) on another after bonding, for the purpose of finishing, removing the excess of the joint resulting from the bonding, and rectifying the defects associated with the stacking, so as to readjust the dimensional parameters at each level, and correct defects along the so-called vertical axis Z orthogonal to the plane XY that are linked to the potential variations of thicknesses of the plates and of said joint,
- reproducing the steps of bonding and extraction for each of the remaining strata to be assembled.

2. The method according to claim 1, **characterized in that** a step of determining the type, the shape and the positioning of assembly elements internal or external to the object is inserted between the step of digital decomposition of the object and the step of optimized distribution in a set.

3. A machine for automating the layer-by-layer manufacturing of an object using a solid/solid additive manufacturing method, the machine comprising a machining table (2; 5) held by vacuum and at least one machining tool movably mounted in displacement above said table, **characterized in that** it also comprises a turning station (4) comprising a cross-member (42), which can be moved longitudinally above said table (2; 5) and can be moved vertically, and which carries a means (43; 48) for gripping a plate (M) mounted movably in rotation along an axis parallel to said cross-member (42), and comprising a means (45; 46; 22) for supporting a plate (M), which means is designed to allow said plate to be gripped by one or the other of its two faces (R, V), by means of said gripping means (43), and also comprising means (21) for wedging along X and Y, which means is capable of allowing the marking and positioning of a plate (M), of a set (P) or of a stratum (S).

4. The machine according to claim 3, **characterized in that** the cross-member (42) that carries the gripping means (43) of the turning station (4) is movably mounted on two benches (30, 31), while a tool holder (33; 80) is movably mounted along a movable cross-member (32; 8) on the same two benches.

5. The machine according to claim 3, **characterized in that** the means (48) for gripping a plate (M) is carried by two movable columns (47).

6. The machine according to claim 4 or claim 5, **characterized in that,** on the tool holder (3; 80), means for gripping a cut piece, as well as sizing means or the like, can be adapted.

7. The machine according to any one of claims 4, 5 or 6, **characterized in that** the machining means (34) can also be adapted to the tool holder (33).

8. The machine according to any one of claims 4, 5, 6 or 7,
**characterized in that** it further comprises means (35) for cleaning the table (2; 5), which can be adapted to the tool holder (33).

9. The machine according to any one of claims 4, 5, 6, 7 or 8, **characterized in that** it comprises an assembly zone (9), comprising a mounting table (90) associated with an elevator able to hold the object (O) to be manufactured at a height that depends on the height of the machining table (2).

10. The machine according to claim 9, **characterized in that** the assembly zone comprises means (93) for clamping the object (O), during and after bonding, against the mounting table (90), which means cooperate with the elevator of said table (90) to carry out the pressing of said object (O).

11. The machine according to any one of claims 9 to 10, **characterized in that** the means (45; 46) for supporting a plate (P) is retractably mounted in the machining table (2).
